Europäisches Patentamt

European Patent Office

Office européen des brevets

(11) Veröffentlichungsnummer: **0 170 770**
A2

# (12) EUROPÄISCHE PATENTANMELDUNG

(21) Anmeldenummer: **85103074.2**

(51) Int. Cl.⁴: **A 23 G 9/02**

(22) Anmeldetag: **16.03.85**

(30) Priorität: **09.08.84 DE 8423709 U**

(43) Veröffentlichungstag der Anmeldung: **12.02.86 Patentblatt 86/7**

(84) Benannte Vertragsstaaten: **AT BE CH DE FR GB IT LI LU NL SE**

(71) Anmelder: **Milchhof-Eiskrem GmbH & Co. KG, Seibelstrasse 36, D-4020 Mettmann (DE)**

(72) Erfinder: **Rogge, Friedrich H.F., Seibelstrasse 40, D-4020 Mettmann (DE)**
Erfinder: **Gabriel, Günther, Berliner Strasse 8, D-4020 Mettmann 2 (DE)**

(74) Vertreter: **Gille, Christian, Dipl.-Ing. et al, Redies, Redies, Türk & Gille Bruckner Strasse 20, D-4000 Düsseldorf 13 (DE)**

(54) **Eiswaffel.**

(57) Es ist eine Eiswaffel (1) mit einer zweiteiligen äußeren Hülle (2, 3) und einer in der Hülle untergebrachten Eiskrem-Füllung offenbart, bei der die Hülle (1) die Füllung vollständig umschließende Außenwände (5) und die Füllung in einzelne Portionen unterteilende Zwischenräume (6, 7, 8) aufweist, so daß eine Mehrzahl napfartiger Vertiefungen (4) gebildet ist, die jeweils von Stegen (6, 7, 8) umschlossen sind, welche auf dem anderen Teil (2 bzw. 3) der Hülle aufliegen.

EP 0 170 770 A2

Milchhof-Eiskrem GmbH & Co. KG, Seibelstr. 36, 4020 Mettmann

E I S W A F F E L

Die Erfindung betrifft eine Eiswaffel mit einer zweiteiligen äußeren Hülle und einer in der Hülle untergebrachten Eiskrem-Füllung.

Einwaffeln werden im allgemeinen fabrikatorisch hergestellt und über die üblichen Kühlketten an die Verbraucher geliefert. Die bekannten Eiswaffeln bestehen aus zwei flachen bzw. plattenförmigen äußeren Waffeln und einer zwischen diesen angeordneten Eislage. Die Waffeln bedecken die Ober- und Unterseite der Eisfüllung, während deren Seitenkanten frei liegen. Für den Vertriebsweg wird jede Eiswaffel in eine beispielsweise aus Papier bestehende Hülle gepackt, welche auch die Seitenkanten der Eisfüllung überdeckt. Für den Verzehr wird die Eiswaffel aus der Verpackung entnommen und muß dann sofort gegessen werden, weil die an den Kanten offenliegende Eisfüllung durch Wärmeeinfluß sich erwärmt und je nach Umgebungstemperatur mehr oder weniger schnell zu tropfen oder gar auszufließen beginnt. Da die Eisfüllung an den Seitenkanten frei liegt, wenn die Eiswaffel aus der Verpackung herausgenommen worden ist, kann sie auch durch Staub oder andere Fremdkörper leicht verschmutzen, da sich derartiger Schmutz an der feuchten Eisfüllung leichter festsetzt als an den als Handschutz dienenden, oben und unten angeordneten Waffeln.

Der Erfindung liegt die Aufgabe zugrunde, eine verbesserte Eiswaffel zu schaffen, die nicht auf einmal gegessen werden muß und bei der die Eisfüllung auch dann nach außen abgedeckt ist, wenn ein Teil der Eiswaffel bereits verzehrt wurde.

Diese Aufgabe wird erfindungsgemäß dadurch gelöst, daß die Hülle die Eiskrem-Füllung vollständig umschließende Außenwände und die Füllung in einzelne Portionen unterteilende Zwischenwände aufweist. Erfindungsgemäß wird also eine Eiswaffel geschaffen, deren Hülle die Eiskrem-Füllung vollständig umschließt und außerdem in einzelne Portionen unterteilt.

Dadurch kann man die Eiswaffel stückweise verzehren, ohne dabei die restliche Eiskrem-Füllung frei zu legen. Auf diese Weise erreicht man, daß die Eiskrem-Füllung nach Entnahme der Eiswaffel aus einem Kühlbehälter länger kühl bleibt, nicht austropfen oder auslaufen kann und auch keinen Schmutz durch herumfliegenden Staub und dergleichen aufnimmt.

Vorzugsweise ist wenigstens ein Teil der zweiteiligen Hülle mit einer Mehrzahl von napfartigen Vertiefungen versehen, die jeweils von Stegen umschlossen sind, welche auf dem anderen Teil der Hülle aufliegen. Die napfartigen Vertiefungen nehmen die einzelnen Portionen der Eiskrem-Füllung auf, während die zwischen den napfartigen Vertiefungen befindlichen Stege diese Portionen gegen benachbarte Portionen isolieren. Im Bereich dieser Stege können Stücke der Eiswaffel abgebrochen werden, ohne die darin befindlichen Eiskrem-Portionen frei zu legen, ebenso wenig wie die im verbleibenden Teil der Eiswaffel befindlichen Eiskrem-Portionen hierbei geöffnet oder freigelegt werden.

Gemäß einer bevorzugten praktischen Ausführungsform der Erfindung sind die napfartigen Vertiefungen zwischen einander rechtwinklig überkreuzenden Stegen vorgesehen, so daß die Eiswaffel eine ähnliche Form wie eine Schokoladentafel aufweist, von der einzelne Riegel oder Stücke zum Verzehr abgebrochen werden können. Allerdings unterscheidet sich die erfindungsgemäße Eiswaffel von einer Schokoladentafel dadurch, daß sie eine äußere Hülle aufweist, welche die Eiskrem-Füllung vollständig umschließt und beim Anfassen nicht verschmiert. Die Hülle kann aus genießbarem Material bestehen, beispielsweise einem Gebäck.

In der Zeichnung ist ein Ausführungsbeispiel einer erfindungsgemäßen Eiswaffel mit napfartigen Vertiefungen sowohl in der Oberseite als der Unterseite der zweiseitigen Hülle dargestellt, und zwar zeigt

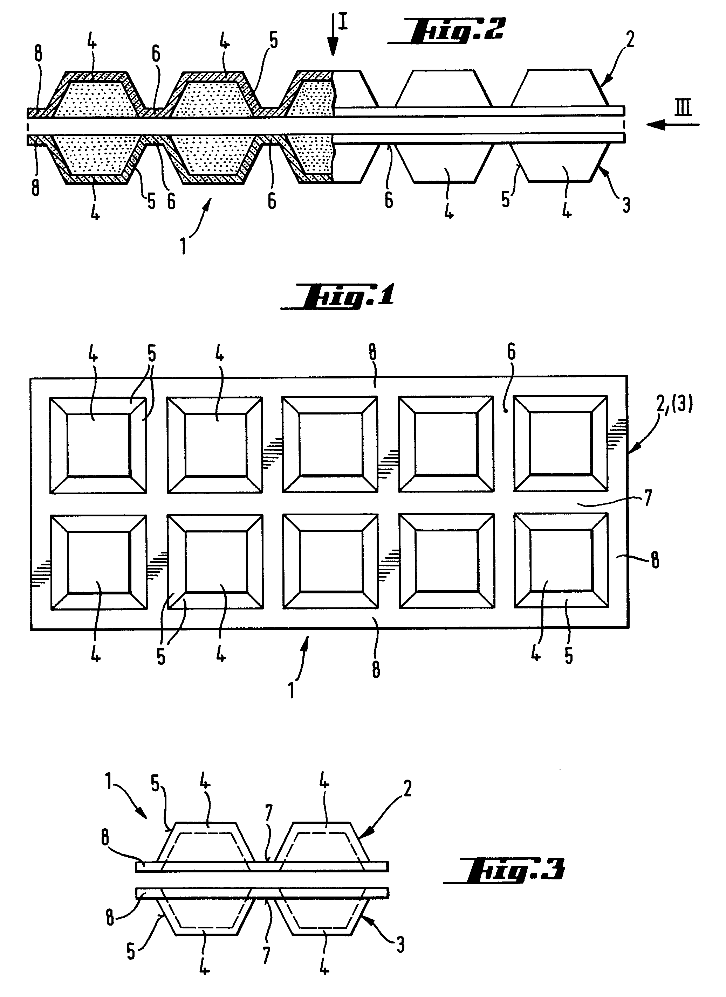

Fig. 1    eine Draufsicht auf die Eiswaffel,

Fig. 2    eine teilweise geschnittene Seitenansicht der Eiswaffel, bevor die beiden Teile der Hülle vollständig zusammengesetzt sind, und

Fig. 3    eine Stirnansicht der Eiswaffel wie in Fig. 2.

Die in der Zeichnung dargestellte Eiswaffel 1 hat eine aus zwei gleichen Teilen 2 und 3 bestehende Hülle, die eine in der Zeichnung nicht dargestellte Eiskrem-Füllung enthält. Beide Teile 2 und 3 der Hülle haben in zwei Reihen angeordnete napfartige Vertiefungen 4 mit schrägstehenden Seitenwänden 5 und dazwischen befindlichen, einander rechtwinklig überkreuzenden Stegen 6 und 7. Außerdem ist an der Außenkante ein umlaufender flanschartiger Steg 8 vorgesehen.

Bei geschlossener Hülle liegen die Stege 6,7 und 8 flach aufeinander und trennen somit die Innenräume der Vertiefungen 4 voneinander. Ein geeignetes Klebemittel hält die Teile 2 und 3 zusammen.

Für den Verzehr der Eiswaffel 1 bricht man einzelne, jeweils aus zwei gegenüberliegenden napfartigen Vertiefungen 4 versehene Stücke entlang den Stegen 6 und ggfs. 7 vom übrigen Teil der Waffel ab und kann sie als Ganzes in den Mund stecken. Somit wird die in den einzelnen einander gegenüberliegenden und sich somit ergänzenden Vertiefungen 4 befindliche Eisfüllung beim Verzehr erst freigelegt, wenn sich das betreffende Stück der Eiswaffel im Mund befindet. Die nicht abgebrochenen Stücke halten die darin befindlichen Portionen Eiskrem-Füllung geschlossen und isoliert von den anderen Portionen, so daß die Füllung lange den Eischarakter behält und man die Eiswaffel dementsprechend nicht auf einmal verzehren muß.

Die erfindungsgemäße Eiswaffel eignet sich besonders für den Verzehr in Kraftfahrzeugen, Flugzeugen und dergleichen, wenn man zwar innerhalb einer überblickbaren Zeitspanne eine bestimmte Eismenge essen möchte, sich mit dem Verzehr aber Zeit lassen will.

Milchhof-Eiskrem GmbH & Co. KG, Seibelstr. 36, 4020 Mettmann

<u>Schutzansprüche</u>

1. Eiswaffel, mit einer zweiteiligen äußeren Hülle und einer in der Hülle untergebrachten Eiskrem-Füllung, **dadurch gekennzeichnet,** daß die Hülle die Füllung vollständig umschließende Außenwände und die Füllung in einzelne Portionen unterteilende Zwischenwände aufweist.

2. Eiswaffel nach Anspruch 1, dadurch gekennzeichnet, daß wenigstens ein Teil der Hülle eine Mehrzahl von napfartigen Vertiefungen aufweist, die jeweils von Stegen umschlossen sind, welche auf dem anderen Teil der Hülle aufliegen.

3. Eiswaffel nach Anspruch 1 oder 2, dadurch gekennzeichnet, daß die napfartigen Vertiefungen zwischen einander rechtwinklig überkreuzenden Stegen vorgesehen sind.

G/b

0170770

*Fig.2*

*Fig.1*

*Fig.3*